(19) Europäisches Patentamt
European Patent Office
Office européen des brevets

(11) Publication number: **0 017 512 B1**

(12) **EUROPEAN PATENT SPECIFICATION**

(45) Date of publication of patent specification: **14.11.84**

(21) Application number: **80301136.0**

(22) Date of filing: **09.04.80**

(51) Int. Cl.³: **C 08 F 226/06,** C 08 F 220/54 // B29D11/02 ,(C08F226/06, 220/54, 220/12, 220/04, 246/00),(C08F220/54, 226/06, 220/12, 220/04, 246/00)

(54) **Polymeric materials, process for preparing them and shaped articles and contact lenses formed from them.**

(30) Priority: **10.04.79 GB 7912546**

(43) Date of publication of application: **15.10.80 Bulletin 80/21**

(45) Publication of the grant of the patent: **14.11.84 Bulletin 84/46**

(84) Designated Contracting States: **AT BE CH DE FR GB IT LI LU NL SE**

(56) References cited:
**FR-A-2 091 417**
**GB-A-1 566 249**

(73) Proprietor: **KELVIN LENSES LIMITED**
**Kelvin House**
**Denton, Manchester M34 2AH (GB)**

(72) Inventor: **Tighe, Brian John**
**49 Wycome Road**
**Hall Green, Birmingham, B28 9EN (GB)**
Inventor: **Gee, Howard James**
**2 Arden Close**
**Simmondley, Glossop Derbyshire SK13 8PD (GB)**

(74) Representative: **Goldin, Douglas Michael et al**
**J.A. KEMP & CO. 14, South Square Gray's Inn**
**London WC1R 5EU (GB)**

**EP 0 017 512 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to polymeric materials suitable for use in bio-medical applications, in particular in manufacturing contact lenses, where the materials are required to be in contact with living tissues for long periods.

The requirements for polymeric materials in such applications are both precise and severe. The material needs to be fabricable without degradation, inert in a biological environment, and toxicologically inactive. In addition, the material needs to have the required chemical, physical and mechanical properties for the particular application and to be sterilisable without adversely affecting these properties. These problems are particularly acute when the material is used in the manufacture of a contact lens, especially an extended wear contact lens. In that case, the polymeric material should, as well as being optically transparent, possess four more properties of major importance. Firstly, as the lens is to be considered as an extension of the cornea, it is most important that materials should be permeable to gases such as oxygen and carbon dioxide, since the cornea is avascular and acquires oxygen directly from the atmosphere in order to respire. Secondly, the lens should also be easily elastically deformable but recover rapidly in order to minimise disturbance on the cornea whilst avoiding visual instability. Thirdly, the surface of the polymer should be hydrophilic so that the lachrymal fluid may wet the lens sufficiently to maintain a continuous tear film on the lens. Finally, the lens should have a sufficient physical durability to minimise scratching, tearing and splitting in normal, and preferably also abnormal, usage.

One class of polymeric materials which can form extended wear contact lenses are those that form hydrogels when hydrated. Such materials are hard and brittle generally when dry but when swollen with water they have a soft jelly-like elastic consistency. The hydrated lens has far greater compatability with the eye than a hydrophilic lens and this feature facilitates its function as an extended wear lens. Further, as an extended wear lens is to be considered as an extension of the cornea, it is desirable that the properties of the cornea should be approached as nearly as possible.

If the hydrogel is to have a high oxygen permeability, it must have a high equilibrium water content when hydrated, since the "dissolved" oxygen permeability of hydrogels has been found to increase exponentially with increasing water content.

There is currently no known homopolymer which has the properties desirable for an extended wear lens material as discussed above. Hence, there has been a requirement for the production of a hydrophilic copolymer having a high equilibrium water content together with the other desirable properties mentioned above. Various materials have been developed in the prior art which enable a sufficiently high water content to be reached, but such materials suffer from the disadvantage that they are of insufficient strength to be manipulable without risk of damage such as tearing.

GB—A—1391438 describes a copolymer comprising units derived from a hydrophilic olefinically unsaturated monomer containing a heterocyclic group, said units being derived, for example, from N-vinyl pyrrolidone and constituting 50 to 100% by weight of the total hydrophilic monomer components; up to 90% of the total units of the copolymer derived from the olefinically unsaturated hydrophobic monomer such as an alkyl acrylate; and a minor amount of cross-linking units. The Examples illustrate such copolymers which can absorb more than their own dry weight of water upon being immersed in water for 24 hours.

GB—A—1385677 describes a contact lens formed from a high water content hydrogel which can contain at least 55% by weight of water. The hydrogel is of a copolymer of hydroxyalkyl acrylate or methacrylate and a copolymerisable N-vinyl lactam, the copolymer having been cross-linked with a minor proportion of a cross-linking monomer. The copolymer can according to this specification contain minor amounts of comonomers such as acrylic or methacrylic acid, alkyl acrylates and methacrylates and styrene.

GB—A—1566249 describes a plastic material suitable for use in bio-medical applications, particularly contact lenses. The material comprises a hydrophilic copolymer of a hydroxyl substituted unsaturated aliphatic compound, an amide of an unsaturated aliphatic carboxylic acid, and a modifier selected from the group consisting of (i) unsaturated aliphatic compounds comprising a group capable of hydrogen bonding with an amide group and (ii) mono esters of unsaturated alpphatic carboxylic acids, the copolymer being one that is capable of absorbing water.

The disadvantage of raising the water content of the polymeric material, which is necessary to improve its oxygen permeability, is that the higher water content tends to result in a weakening of the material. As a result of extensive studies, it has now been found possible according to the present invention, to formulate vinyl polymeric materials which are suitable for bio-medical applications, particularly for contact lenses, and which are hydratable to a hydrogel having an equilibrium water content of at least 65% by weight and have a desirably high tear strength.

The polymeric materials of the present invention which enable the above properties to be achieved comprise units derived from the reaction of the following monomers in the given proportions:

1) 20 to 40 mole % of a polymerisable amide which is an unsubstituted or substituted amide of a carboxylic acid containing olefinic unsaturation,
2) 25 to 55 mole % of an N-vinyl lactam,
3) 5 to 20 mole % of a polymerisable ester which is an ester of a carboxylic acid containing olefinic unsaturation,
4) 1 to 10 mole %, preferably 1 to 3 mole %, of a polymerisable carboxylic acid containing olefinic unsaturation,
5) 3 to 10 mole %, preferably 5 to 10 mole %, e.g. 7 to 10 mole %, of a polymerisable hydrophobic vinyl monomer, the copolymer being cross-linked with a cross-linking agent in an amount of up to 5, preferably up to 1, weight %, based on the total weight of the monomers.

The olefinically unsaturated carboxylic acid or derivative thereof used in components (1), (3) and (4) is advantageously one containing a vinyl group of structure

$$CH_2{=}C\langle$$

and is preferably acrylic or methacrylic acid.

Component (1) may be an amide of acrylic or methacrylic acid, for example acrylamide, methacrylamide or diacetone acrylamide. This component is present in the copolymer to provide strength and hydrophilicity. It is particularly preferred to use acrylamide alone or a mixture of two or more of acrylamide, methacrylamide and diacetone acrylamide. The combination of acrylamide with one or both of the other two amides named confers a better hydrolytic stability on the material but with a reduced water content compared to acrylamide alone.

The N-vinyl lactam, component (2), is a weakly basic hydrophilic component. The compound may, for example, be N-vinyl pyrrolid-2-one or an alkyl substituted derivative thereof, for example, N-vinyl-5-methylpyrrolid-2-one, N-vinyl-5-ethylpyrrolid-2-one, N-vinyl-5,5-dimethylpyrrolid-2-one, N-vinyl-5,5-diethyl-pyrrolid-2-one or N-vinyl-5-methyl-5-ethylpyrrolid-2-one. Excellent results have been obtained with N-vinylpyrrolid-2-one.

Component (3) may be a hydroxy substituted ester of acrylic or methacrylic acid and is preferably a hydroxy propyl or hydroxy ethyl ester in particular, hydroxy propyl acrylate or hydroxy ethyl methacrylate, the 2-isomers being the more generally used isomers. This component is less hydrophilic than the lactam component; its incorporation reduces the tendency of blocks of the same monomer to form in the copolymer and hence facilitates the even distribution of water in the hydrated copolymer matrix.

The unsaturated aliphatic carboxylic acid is present as a hydrophilic component and is capable of hydrogen bonding with the donor groups in the other monomers, thereby adding strength to the material. Thus, in order to achieve an appropriate balance of high water content and high strength, the quantities of the acid incorporated in the copolymer matrix and the N-vinyl lactam not incorporated in the copolymer matrix must be carefully controlled.

It is, however, unnecessary for the acid component (4) to be introduced specifically into the mixture of monomers since it may already be present in sufficiently high proportion as an impurity in the hydroxy-substituted ester component (3). An alternative way in which it can be introduced is by conversion of $CONH_2$ groups of the amide component (1) to COOH groups during autoclaving of the materials. These alternatives are intended to be comprehended within the scope of the invention.

A preferred example of the hydrophobic vinyl monomer is styrene. However, other hydrophobic monomers may be used such as the monoesters of unsaturated aliphatic carboxylic acids, preferably esters of acrylic or methacrylic acid, for example, methyl methacrylate. Preferably styrene alone is used or a part of the styrene is replaced by an ester of acrylic or methacrylic acid or a mixture thereof, exemplified by the latter ester. It is possible, by adjusting the amount of the hydrophobic monomer incorporated, to adjust the water content of the material. On hydration, the hydrophobic function of the monomer tends to reach the surface of a contact lens and hence alters the surface properties of the lens in a manner which may facilitate dispersion of a foreign proteinaceous matter. Styrene has a further advantage in that, because of the steric hinderence caused by its pendent phenyl groups, chain rotation is hindered and this results in a reduction of the deformability of the copolymer. Styrene also assists in the early formation of a gel and aids the production of a uniform composition. Thus, although high hydrophilicity is required in a contact lens, it is advantageous to include a hydrophobic component, as in the present formulation, in order to reduce the extent to which foreign matter is attracted to the lens.

As an alternative, the necessary cross-linking can be introduced into the copolymer matrix after the main copolymerisation to form a linear chain has been completed. The cross-linking can be introduced in a final compression or injection moulding process in which the final optical form of the lens is produced. Such a method and suitable cross-linking agents are described in GB—A—1436705. In this case, it is desirable that the copolymer should be substantially linear at least prior to moulding so that it can undergo viscous flow under the reaction of heat and pressure above its glass transition temperature and permit the use of compression or injection moulding techniques. The proportion of cross-links introduced into the final copolymer will usually be quite small, preferably 1 to every 10 to 200 repeating polymer units on average and most preferably 1 to every 60 to 100 polymer units. Examples of suitable cross-linking agents which can be used during the main copolymerisation are the diesters of unsaturated aliphatic carboxylic acid, such as ethylene glycol dimethacrylate and polyethylene oxide (for example of molecular weight 400) dimethacrylate or divinyl benzene. When the cross-linking agent is to be added immediately prior to moulding, it may be a diamide of an unsaturated aliphatic carboxylic acid, an anhydride of an aliphatic or aromatic carboxylic acid, a diepoxide or dicumyl peroxide. In the case of such cross-linking agents as ethylene glycol dimethacrylate there may be no necessity to add these specifically since, if hydroxyethyl methacrylate is used as component (3) this may contain sufficient of the diester as impurity to cross-link the material effectively.

In addition to the monomeric component described above, the material may also include small amounts of monomers which improve the physical properties of the polymer. For example, the anti-bacterial properties of the copolymer can be improved by the inclusion of an olefinically unsaturated halogenated phenol.

The polymerisation of the component is suitably carried out in a bulk polymerisation system and initiated by radical initiators or catalysts, or by other radical-generating techniques such as photo initiation for example using u.v. rays.

The polymerisation may be carried out in bulk by mixing the monomer composition with a suitable catalyst in a sealed polyethylene tube to produce rods from which lenses may be lathe cut. Suitable initiators are t-butyl peroctoate, methyl ethyl ketone peroxide and azobisisobutyronitrile.

In bulk polymerisation a number of problems arise because of the presence of the carboxylic acid amide. There are basically three major problems, the first problem stemming from the fact that acrylamide and its derivatives are solids which have only a limited solubility in the other monomers. This may be illustrated by the fact that the molar % solubility of acrylamide in a monomer such as hydroxy propyl acrylate at room temperature is 33 mole % acrylamide in 67 mole % hydroxypropylacrylate. The problem was therefore to find a way to incorporate more acrylamide and yet retain a clear solution at room temperature. This can be overcome by addition of an appropriate amount of water to the reaction mixture thus obtaining a clear solution at room temperature with a greatly increased acrylamide content.

But, because of the problems inherent in using water to dissolve the amide, i.e. that the water must be removed before the material can be lathe cut, the problem arises of finding a range of formulations to overcome the amide solubility problem without adversely affecting other properties. This problem has been overcome by the use of the monomers specified as (2) to (5) in the present invention.

The second problem arises from the fact that the polymerisation of acrylamide containing compositions is known to be violent unless mild conditions of polymerisation are used. If however, the polymerisation is slow, this tends to result in rods of uneven composition with distorted (pyramid-like) shape because of side reactions. It has been found that the use of the initiator methylethylketone peroxide can help to produce good quality rods via rapid, yet non-violent, polymerisation of acrylamide-containing compositions at low temperatures.

The final problem is caused by the fact that the monomers used in preparing the material have different reactivity ratios which also vary with the polymerisation conditions, and hence the resulting rods tend to contain residual monomer which gives rise to tackiness and softening of the rod in some cases. Whilst post-cure and heat treatment in a vacuum removes the tackiness, it also inherently causes discolouration of the rods. Immersion and washing of the rods in suitable solvents, e.g. acetone, for 2 hours followed by washing with methanol can overcome the problem of tackiness as an alternative to prolonged post-cure.

The polymerisation can take place in two distinct stages, firstly gellation which is suitably carried out at a temperature of 40°C to 70°C, but is generally in the range of 60°C to 70°C. The gellation is normally complete within 1 to 4 days e.g. within 48 hours depending upon the temperature used, the nature and amount of the catalyst, the relative proportion of the monomers and the nature of any solvent present. This is then followed by a post-cure which is performed at a higher temperature e.g. 70°C to 100°C, to complete the polymerisation and harden the rod. This latter stage is normally complete in several hours, e.g. up to 10 hours.

After polymerisation the copolymer may, if necessary, be treated to remove the residual monomer, solvent or initiators, washed and dried under vacuum.

Finally, the shaped article is immersed in water or an aqueous medium until equilibrium is reached. The equilibrium water content of the copolymer depends on the nature of the copolymer and its structure and according to this invention will always be in excess of 65% by weight, usually in excess of 70% by weight, for example 73% by weight at 20°C. (Water content is measured as weight of water based on weight of hydrogel (i.e. copolymer when swollen with the water)). High oxygen permeabilities are thus achieved, for example, of the order of 400 to 500, e.g. 480, $\times 10^{-10}$ at 34°C, the units being $cm^3$ (STP) mm $cm^{-2}$ $s^{-1}$ $cm^{-1}$ Hg, otherwise expressed as 0.75 $cm^3$ (STP) mm $cm^{-2}$ $s^{-1}$ $kPa^{-1}$. This level of transmission compares with the theoretical requirement for extended wear of 200 to $300 \times 10^{-10}$ at 34°C and is over six times higher than the

corresponding value for hydrated polyhydroxyethylmethacrylate.

When swollen in water, the polymeric materials are in the form of hydrogels which are particularly suitable for use in making extended wear contact lenses. However, the polymeric material of the invention may be used in other instances where it is required to come into contact with living tissue. Examples of such applications are surgical implants and prosthetic devices for example blood vessels, artificial urethers, heart valves and artificial breast tissue. The polymeric material is also useful for contact with body fluids outside the body, for example, in manufacturing membranes for kidney dialysis and heart/lung machines, swabs, nappy liners, wound dressings and similar applications. The increased strength of the polymeric materials when hydrated, together with their ability to be hydrated to such a great extent, make them particularly valuable in these applications.

The invention will now be illustrated by reference to the following Examples.

Example 1

Recrystallised acrylamide (23.67 g), was dissolved in a mixture of N-vinylpyrrolid-2-one (52.70 g), 2-hydroxypropylacrylate (13.13 g) and styrene (10.50 g). (All liquid monomers having been purified by vacuum distillation). The dissolution was aided by heating the mixture and after cooling the mixture was filtered to remove debris.

To the filtered solution was added, methacrylic acid (1.0 g), ethylenedimethacrylate (1.0 g) and t-butyl peroctoate (0.14 g). The solution was thoroughly mixed, split into portions, each of 20 g, and poured into previously prepared high density polyethylene moulds. Each mould was individually degassed with nitrogen (high purity) for five minutes. Each mould was sealed and the polymerisation carried out at 60°C for 48 hours in a constant temperature water bath. To complete the polymerisation, the gelled rod was heated in an oven at 100°C for a further 2 hours. The mould was stripped away to yield a hard glassy polymer (designated JW1), which when machined into a contact lens and allowed to equilibrate with 0.9% saline for 4 days had an equilibrium water content at 20°C of 72.4% by weight.

Example 2

Recrystallised acrylamide (29.34 g) was dissolved in a mixture of N-vinylpyrrolid-2-one (40.14 g), 2-hydroxypropylacrylate (20.15 g), styrene (8.6 g) and methacrylic acid (1.78 g). The mixture was heated to aid dissolution of the acrylamide, and the solution had to be maintained at an elevated temperature to avoid precipitation of the acrylamide. When dissolution was complete, ethylene dimethacrylate (1.0 g) and methylethylketone peroxide (1.0 g) were added to the solution.

The mixture was split into portions, each of 20 g, and transferred to previously prepared high density polyethylene moulds, maintained at an elevated temperature in a water bath, where each mould was degassed with nitrogen (high purity) and the moulds sealed. Polymerisation was carried out at 40°C for 168 hours, 60°C for 72 hours, and 80°C for 2 hours. The moulds were stripped away to yield a hard glassy polymer (designated IM1), which when machined into a contact lens and allowed to equilibrate with 0.9% saline for 4 days, had an equilibrium water content at 20°C of 77.0% by weight.

Example 3

The procedure described in Example 1 was repeated dissolving 18.7 mole % acrylamide, 9.3 mole % methacrylamide and 9.3 mole % diacetone acrylamide in a mixture of 37.3 mole % N-vinyl pyrrolidone, 9.3 mole % hydroxypropyl acrylate and 6.6 mole % styrene and 9.3 mole % methacrylic acid was subsequently added to the filtered solution along with 0.25 weight % of polyethylene oxide (molecular weight 400) dimethacrylate as cross-linking agent and peroxide catalyst as in Example 1. The proportions are based on the total mixture polymerised. The resulting polymer, designated MT3, gave a contact lens, which after equilibration in saline, had a water content at 20°C in excess of 67% by weight.

Example 4

The procedure described in Example 2 was repeated using 14.1 mole % methacrylamide, 9.4 mole % diacetone acrylamide, 51.8 mole % N-vinyl pyrrolidine, 9.4 mole % hydroxypropyl acylate, 5.8 mole % styrene and 9.4 mole % methacrylic acid, again using 0.25 weight % of polyethylene oxide (molecular weight 400) dimethacrylate as cross-linking agent and peroxide catalyst as in Example 2. The resulting polymer, designated MT4, gave a contact lens which, after equilibration in saline, had a water content at 20°C in excess of 67% by weight.

**Claims**

1. A polymeric material suitable for use in biomedical applications comprising units derived from:

(1) 20 to 40 mole % of a polymerisable amide which is an unsubstituted or substituted amide of a carboxylic acid containing olefinic unsaturation,

(2) 25 to 55 mole % of an N-vinyl lactam,

(3) 5 to 20 mole % of a polymerisable ester which is an ester of a carboxylic acid containing olefinic unsaturation,

(4) 1 to 10 mole % of a polymerisable carboxylic acid containing olefinic unsaturation,

(5) 3 to 10 mole % of a polymerisable hydrophobic vinyl monomer,

the amounts of monomers (1) to (5) totalling 100 mole %, and the copolymer being crosslinked with up to 5 weight % of a crosslinking agent based on the total weight of monomers (1) to (5).

2. A polymeric material according to claim 1 wherein component (1) is an amide of acrylic or methacrylic acid.

3. A polymeric material according to claim 1 wherein component (1) is acrylamide, methacrylamide or diacetone acrylamide or a mixture of two or all of these.

4. A polymeric material according to any one of the preceding claims wherein component (2) is N-vinylpyrrolid-2-one.

5. A polymeric material according to any one of the preceding claims wherein component (3) is a hydroxy substituted ester of acrylic or methacrylic acid.

6. A polymeric material according to claim 5 wherein component (3) is hydroxy-propyl acrylate or hydroxyethyl methacrylate.

7. A polymeric material according to any one of the preceding claims containing units derived from 1 to 3 mole % of component (4).

8. A polymeric material according to any one of the preceding claims wherein component (4) is acrylic or methacrylic acid.

9. A polymeric material according to any one of the preceding claims containing units derived from 5 to 10 mole % of component (5).

10. A polymeric material according to any one of the preceding claims wherein component (5) is styrene, an ester of acrylic or methacrylic acid or a mixture thereof.

11. A polymeric material according to any one of the preceding claims crosslinked with up to 1 weight % of a crosslinking agent based on the total weight of monomers (1) to (5).

12. A polymeric material according to any one of the preceding claims wherein the crosslinking agent is ethylene glycol dimethacrylate, a polyethylene oxide dimethacrylate, divinyl benzene, a diamide of an unsaturated aliphatic carboxylic acid, an anhydride of an aliphatic or aromatic carboxylic acid, a diepoxide or dicumyl peroxide.

13. A shaped article, suitable for producing a contact lens, comprising a polymeric material as claimed in any one of the preceding claims.

14. A polymeric material according to any one of the preceding claims in the form of a hydrogel containing at least 65% by weight of water.

15. A contact lens comprising a polymeric material as claimed in claim 14.

16. A process for preparing a polymeric material suitable for use in biomedical applications which comprises copolymerising a monomer mixture comprising:

(1) 20 to 40 mole % of a polymerisable amide which is an unsubstituted or substituted amide of a carboxylic acid containing olefinic unsaturation,
(2) 25 to 55 mole % of an N-vinyl lactam,
(3) 5 to 20 mole % of an polymerisable ester which is an ester of a carboxylic acid containing olefinic unsaturation,
(4) 1 to 10 mole % of a polymerisable carboxylic acid containing olefinic unsaturation,
(5) 3 to 10 mole % of a polymerisable hydrophobic vinyl monomer,

the amounts of the monomers (1) to (5) totalling 100 mole %, and either the copolymerisation is carried out in the presence of a crosslinking agent or the resulting copolymer is subsequently crosslinked with a crosslinking agent, the crosslinking agent being used in an amount up to 5 weight % based on the total weight of monomers (1) to (5).

17. A process according to claim 16, wherein the polymeric material is as claimed in any one of claims 2 to 11.

18. A process according to claim 16 or 17 wherein the copolymerisation is carried out in bulk.

19. A process according to claim 18 wherein t-butyl peroctoate or methyl ethyl ketone peroxide is added as initiator.

20. A process according to any one of claims 16 to 19 wherein a crosslinking agent is present in the monomer mixture prior to the copolymerisation.

21. A process according to claim 20 wherein the crosslinking agent is ethylene glycol dimethacrylate, polyethylene oxide dimethacrylate or divinyl benzene.

22. A process according to claim 20 or 21 wherein the copolymerisation is performed in a mould to produce a shaped article.

23. A process according to any one of claims 16 to 19 wherein a copolymer is produced in linear form from the monomers (1) to (5) and is compression or injection moulded into a shaped article in the presence of a crosslinking agent.

24. A process according to claim 22 or 23 wherein the shaped article is cut to form a contact lens blank.

25. A process according to any one of claims 16 to 24 wherein the product is immersed in water or an aqueous medium until equilibrium is reached, to form a hydrogel.

**Patentansprüche**

1. Polymermaterial, welches zur Verwendung in biomedizinischen Anwendungen geeignet ist, und welches Einheiten enthält, die erhalten werden aus

(1) 20 bis 40 Mol-% eines polymerisierbaren Amids, welches ein unsubstituiertes oder substituiertes Amid einer Carbonsäure ist, die eine olefinische Nichtsättigung enthält,
(2) 25 bis 55 Mol-% eines N-Vinyllactams,

(3) 5 bis 20 Mol-% eines polymerisierbaren Esters, der ein Ester einer Carbonsäure mit olefinischer Nichtsättigung ist,
(4) 1 bis 10 Mol-% einer polymerisierbaren Carbonsäure, die eine olefinische Nichtsättigung enthält,
(5) 3 bis 10 Mol-% eines polymerisierbaren hydrophoben Vinylmonomers,

wobei die Mengen der Monomeren (1) bis (5) insgesamt 100 Mol-% ergeben, und das Copolymer mit bis zu 5 Gew.-% eines Vernetzungsmittels, basierend auf der Gesamtmenge ser Monomeren (1) bis (5), vernetzt ist.

2. Polymermaterial nach Anspruch 1, worin die Komponente (1) ein Amid der Acrylsäure oder Methacrylsäure ist.

3. Polymermaterial nach Anspruch 1, worin die Komponente (1) Acrylamid, Methacrylamid oder Diacetonacrylamid oder ein Gemisch zweier oder aller dieser Verbindungen ist.

4. Polymermaterial nach einem der voranstehenden Ansprüche, worin Komponente (2) N-Vinylpyrrolid-2-on ist.

5. Polymermaterial nach einem der voranstehenden Ansprüche, worin Komponente (3) ein durch eine Hydroxylgruppe substituierter Ester von Acrylsäure oder Methacrylsäure ist.

6. Polymermaterial nach Anspruch 5, worin Komponente (3) Hydroxypropylacrylat oder Hydroxyethylmethacrylat ist.

7. Polymermaterial nach einem der voranstehenden Ansprüche, welches Einheiten enthält, die von 1 bis 3 Mol-% der Komponente (4) erhalten sind.

8. Polymermaterial nach einem der voranstehenden Ansprüche, worin Komponente (4) Acrylsäure oder Methacrylsäure ist.

9. Polymermaterial nach einem der voranstehenden Ansprüche, welches Einheiten enthält, die von 5 bis 10 Mol-% der Komponente (5) erhalten sind.

10. Polymermaterial nach einem der voranstehenden Ansprüche, worin Komponente (5) Styrol, ein Ester von Acrylsäure oder Methacrylsäure oder ein Gemisch davon ist.

11. Polymermaterial nach einem der voranstehenden Ansprüche, welches mit bis zu 1 Gew.-% eines Vernetzungsmittels, basierend auf der Gesamtmenge der Monomeren (1) bis (5), vernetzt ist.

12. Polymermaterial nach einem der voranstehenden Ansprüche, worin das Vernetzungsmittel Ethylenglykoldimethacrylat, ein Polyethylenoxiddimethacrylat, Divinylbenzol, ein Diamid einer ungesättigten aliphatischen Carbonsäure, ein Anhydrid einer aliphatischen oder aromatischen Carbonsäure, ein Diepoxid oder Dicumylperoxid ist.

13. Geformter Gegenstand, der zur Herstellung einer Kontaktlinse geeignet ist, und der ein Polymermaterial nach einem der voranstehenden Ansprüche enthält.

14. Polymermaterial nach einem der voranstehenden Ansprüche in der Form eines Hydrogels, welches mindestens 65 Gew.-% Wasser enthält.

15. Kontaktlinse, die ein Polymermaterial nach Anspruch 14 enthält.

16. Verfahren zur Herstellung eines Polymermaterials, welches zur Verwendung in biometizinischen Anwendungen geeignet, ist wobei ein Monomergemisch copolymerisiert wird, welches

(1) 20 bis 40 Mol-% eines polymerisierbaren Amids, welches ein unsubstituiertes oder substituiertes Amid einer Carbonsäure ist, die eine olefinische Nichtsättigung enthält,
(2) 25 bis 55 Mol-% eines N-Vinyllactams,
(3) 5 bis 20 Mol-% eines polymerisierbaren Esters, der ein Ester einer Carbonsäure mit olefinischer Nichtsättigung ist,
(4) 1 bis 10 Mol-% einer polymerisierbaren Carbonsäure, die eine olefinische Nichtsättigung enthält,
(5) 3 bis 10 Mol-% eines polymerisierbaren hydrophoben Vinylmonomers,

enthält, wobei die Mengen der Monomeren (1) bis (5) insgesamt 100 Mol-% ergeben, und die Copolymerisation entweder in Gegenwart eines Vernetzungsmittels durchgeführt wird oder das erhaltene Copolymer anschließend mit einem Vernetzungsmittel vernetzt wird, wobei das Vernetzungsmittel in einer Menge von bis zu 5 Gew.-%, basierend auf der Gesamtmenge der Monomeren (1) bis (5), vernetzt wird.

17. Verfahren nach Anspruch 16, worin das Polymermaterial dem Material nach einem der Ansprüche 2 bis 11 entspricht.

18. Verfahren nach Anspruch 16 oder 17, worin die Copolymerisation in Masse durchgeführt wird.

19. Verfahren nach Anspruch 18, worin tert-Butylperoctoat oder Methylethylketonperoxid als Initiator zugesetzt wird.

20. Verfahren nach einem der Ansprüche 16 bis 19, worin ein Vernetzungsmittel in dem Monomerengemisch vor der Copolymerisation vorhanden ist.

21. Verfahren nach Anspruch 20, worin das Vernetzungsmittel Ethylenglykoldimethacrylat, Polyethylenoxiddimethacrylat oder Divinylbenzol ist.

22. Verfahren nach Anspruch 20 oder 21, worin die Copolymerisation in einer Form durchgeführt wird, um einen geformten Gegenstand herzustellen.

23. Verfahren nach einem der Ansprüche 16 bis 19, worin ein Copolymer in linearer Form aus den Monomeren (1) bis (5) hergestellt wird und zu einem geformten Gegenstand in Gegenwart eines Vernetzungsmittels druckgeformt oder spritzgegossen wird.

24. Verfahren nach Anspruch 22 oder 23, worin der geformte Gegenstand geschnitten wird, um eine Kontaktlinsenplatte zu bilden.

25. Verfahren nach einem der Ansprüche 16 bis 24, worin das Produkt in Wasser oder ein

wässriges Medium eingetaucht wird, bis der Gleichgewichtszustand erreicht ist, um ein Hydrogen zu bilden.

**Revendications**

1. Un matériau polymérique utilisable dans des applications biomédicales comprenant des motifs dérivés de:

(1) 20 à 40 moles % d'une amide polymérisable qui est une amide substituée ou non substituée d'un acide carboxylique à insaturation oléfinique,
(2) 25 à 55 moles % d'un N-vinyl lactame,
(3) 5 à 20 moles % d'un ester polymérisable qui est un ester d'un acide carboxylique à insaturation oléfinique,
(4) 1 à 10 moles % d'un acide carboxylique polymérisable à insaturation oléfinique,
(5) 3 à 10 moles % d'un monomère vinylique polymérisable hydrophobe, les proportions des monomères (1) á (5) faisant au total 100 moles %, et le copolymère étant réticulé avec jusqu'à 5% en poids d'un agent de réticulation, par rapport au poids total des monomères (1) à (5).

2. Un matériau polymérique selon la revendication 1, dans lequel le constituant (1) est une amide d'acide acrylique ou méthacrylique.

3. Un matériau polymérique selon la revendication 1, dans lequel le constituant (1) est l'acrylamide, la méthacrylamide ou la diacétone acrylamide, ou un mélange de deux de ces composés ou de tous ces composés.

4. Un matériau polymérique selon l'une quelconque des revendications précédentes, dans lequel le constituant (2) est la N-vinylpyrrolid-2-one.

5. Un matériau polymérique selon l'une quelconque des revendications précédentes, dans lequel le constituant (3) est un ester hydroxy-substitué d'acide acrylique ou méthacrylique.

6. Un matériau polymérique selon la revendication 5, dans lequel le constituant (3) est l'acrylate d'hydroxy-propyle ou le méthacrylate d'hydroxy-éthyle.

7. Un matériau polymérique selon l'une quelconque des revendications précédentes, contenant des motifs dérivés de 1 à 3 moles % du constituant (4).

8. Un matériau polymérique selon l'une quelconque des revendications précédentes, dans lequel le constituant (4) est l'acide acrylique ou méthacrylique.

9. Un matériau polymérique selon l'une quelconque des revendications précédentes, contenant des motifs dérivés de 5 à 10 moles % de constituant (5).

10. Un matériau polymérique selon l'une quelconque des revendications précédentes, dans lequel le constituant (5) est le styrène, un ester d'acide acrylique ou méthacrylique, ou un mélange de ces composés.

11. Un matériau polymérique selon l'une quelconque des revendications précédentes, réticulé avec jusqu'à 1% en poids d'un agent réticulant, par rapport au poids total des monomères (1) à (5).

12. Un matériau polymérique selon l'une quelconque des revendications précédentes, dans lequel l'agent réticulant est le diméthacrylate d'éthylèneglycol, un diméthacrylate de polyoxyéthylène, le divinylbenzène, une diamide d'acide carboxylique aliphatique insaturé, un anyhdride d'un acide carboxylique aliphatique ou aromatique, un diépoxyde ou le peroxyde de dicumyle.

13. Un article façonné convenant pour la production d'une lentille de contact, comprenant un matériau polymérique tel que défini dans l'une quelconque des revendications précédentes.

14. Un matériau polymérique selon l'une quelconque des revendications précédentes, sous la forme d'un hydrogen contenant au moins 65% en poids d'eau.

15. Une lentille de contact comprenant un matériau polymérique tel que défini dans la revendication 14.

16. Un procédé de préparation d'un matériau polymérique convenant pour l'utilisation dans des applications biomédicales, qui comprend l'étape consistant à copolymériser un mélange de monomères comprenant:

(1) 20 à 40 moles % d'une amide polymérisable qui est une amide substituée ou non substituée d'un acide carboxylique à insaturation oléfinique,
(2) 25 à 55 moles % d'un N-vinyl-lactame,
(3) 5 à 20 moles % d'un ester polymérisable qui est un ester d'un acide carboxylique à insaturation oléfinique,
(4) 1 à 10 moles % d'un acide carboxylique polymérisable à insaturation oléfinique,
(5) 3 à 10 moles % d'un monomère vinylique polymérisable hydrophobe,

les proportions des monomères (1) á (5) faisant au total 100 moles %, et dans lequel soit la copolymérisation est effectuée en présence d'un agent réticulant, soit le copolymère résultant est subséquement réticulé avec un agent réticulant, l'agent réticulant étant utilisé en proportion allant jusqu'à 5% en poids par rapport au poids total des monomères (1) à (5).

17. Un procédé selon la revendication 16, dans lequel le matériau polymérique est tel que défini dans l'une quelconque des revendications 2 à 11.

18. Un procédé selon la revendication 16 ou 17, dans lequel la copolymérisation est effectuée en masse.

19. Un procédé selon la revendication 18, dans lequel on ajoute comme initiateur du peroctoate de t-butyle ou du peroxyde de méthyl éthyl cétone.

20. Un procédé selon l'une quelconque des

revendications 16 à 19, dans lequel un agent de réticulation est présent dans le mélange de monomères avant la copolymérisation.

21. Un procédé selon la revendication 20, dans lequel l'agent de réticulation est le diméthacrylate d'éthylèneglycol, un diméthacrylate de polyoxyéthylène ou le divinylbenzène.

22. Un procédé selon la revendication 20 ou 21, dans lequel la copolymérisation est effectuée dans un moule pour obtenir un produit moulé.

23. Un procédé selon l'une quelconque des revendications 16 à 19, dans lequel on produit un copolymère en forme linéaire à partir des monomères (1) à (5), et ce copolymère est moulé par compression ou par injection en article moulé en présence d'un agent réticulant.

24. Un procédé selon la revendication 22 ou 23, dans lequel l'article moulé est découpé pour former une ébauche de lentille de contact.

25. Un procédé selon l'une quelconque des revendications 16 à 24, dans lequel le produit est immergé dans l'eau ou dans un milieu aqueux jusqu'à ce que l'équilibre soit atteint, pour former un hydrogel.